# EUROPEAN PATENT SPECIFICATION

(11) **EP 4 112 963 B1**
(45) Date of publication and mention of the grant of the patent: **28.01.2026**
(21) Application number: 21759813.5
(22) Date of filing: 18.02.2021
(51) Int. Cl.: F16D 27/112

(54) **ELECTROMAGNETIC CLUTCH**
ELEKTROMAGNETISCHE KUPPLUNG
EMBRAYAGE ÉLECTROMAGNÉTIQUE

(30) Priority: 28.02.2020 JP 2020032622
(43) Date of publication of application: 04.01.2023
(73) Proprietor: Valeo Japan Co., Ltd., Kumagaya-Shi SAITAMA 360-0193 (JP)
(72) Inventor: HIRANO, Ichiro, Kumagaya-shi Saitama 360-0193 (JP); OHK, Changheon, Kumagaya-shi Saitama 360-0193 (JP); LEE, Junghun, Kumagaya-shi Saitama 360-0193 (JP)
(74) Representative: Valeo Powertrain Systems
(86) International application number: PCT/JP2021/006086
(87) International publication number: WO 2021/172156

(56) References cited:
- DE-A1- 102010 051 994
- JP-A- 2009 281 579
- JP-A- 2009 281 579
- JP-A- 2011 112 056
- JP-A- 2014 126 108
- JP-U- S5 937 438
- JP-U- S6 359 223

## Description

### Technical Field

The present invention relates to an electromagnetic clutch used to interrupt a rotational force transmitted from a rotational power source such as an engine and a motor to a compressor for an air conditioner for a vehicle, and more particularly to an electromagnetic clutch whose front side is covered with a cover.

### Background Art

For example, as disclosed in PTL 1, a general electromagnetic clutch used in a compressor for an air conditioner for a vehicle includes: a rotor that is rotatably externally fitted, via a bearing, on an outer periphery of a cylindrical part of a housing supporting a drive shaft and that rotates by receiving a rotational force from a rotational power source such as an engine or a motor; a hub that is coupled to the drive shaft so as not to be rotatable relative thereto and that rotates together with the drive shaft; an armature plate that is coupled to the hub and that is disposed to face a side end surface of the rotor with a slight gap therebetween; and an excitation coil that is accommodated in the inside of an annular space of the rotor.

Depending on the type and purpose of a vehicle, an installation place of the compressor may be, for example, a severe water-exposure environment with respect to the electromagnetic clutch, such as an environment in which the electromagnetic clutch is likely to be exposed to water, since the compressor is installed beside an engine of a rear side engine room of a bus and the electromagnetic clutch is oriented toward an outer side of the vehicle. In this way, when the electromagnetic clutch is exposed to water, the water may enter a bearing for smoothly rotating the rotor, so that an inside of the bearing may rust. In addition, in the bus, an inside of the rear side engine room may be cleaned with high-pressure water by a high-pressure cleaning machine, and in this case, since the water is more likely to enter the bearing of the electromagnetic clutch, rust in the bearing is also likely to progress. Therefore, as shown in PTL 1, the electromagnetic clutch may be waterproofed by covering an entire front side end surface of the armature plate of the electromagnetic clutch with a cover.

On the other hand, in the electromagnetic clutch, since the rotor and the armature plate are frictionally engaged with each other, abrasion power is generated from friction surfaces of the rotor and the armature plate. In order to prevent the abrasion powder from accumulating in the electromagnetic clutch and causing a problem with respect to an operation of the clutch, it is required to provide a configuration for discharging the abrasion powder from the inside of the electromagnetic clutch to the outside when the entire front side end surface of the armature plate of the electromagnetic clutch is covered with the cover. Therefore, PTL 1 discloses a configuration in which a foreign matter discharging opening for discharging foreign matter such as the abrasion powder generated in the electromagnetic clutch to the outside is provided in the cover that covers the entire front side end surface of the armature plate of the electromagnetic clutch.
Document PTL 2 discloses an electromagnetic power transmission device capable of surely transmitting a rotational driving force and capable of interrupting the transmission of the rotational driving force with a simple structure.

### Citation List

### Patent Literature

PTL 1: JP-A-2009-281579
PTL 2: DE 10 2010 051994 A

### Summary of Invention

### Technical Problem

However, in the configuration of the cover disclosed in PTL 1, as shown in FIGS. 3A, 3B, and 4 of PTL 1, an outer edge part of a circular plate part extends toward an outer periphery of the electromagnetic clutch from the foreign matter discharging opening. Therefore, for example, when the engine room of the bus is cleaned by the high-pressure cleaning machine as described above, the high-pressure water may hit a surface of the outer edge part on the outer periphery of the circular plate part of the cover than the foreign matter discharging opening and enter the electromagnetic clutch from the foreign matter discharging opening of the cover.

The invention is made to solve the above problem, and an object of the invention is to provide an electromagnetic clutch capable of preventing water from entering the electromagnetic clutch from a foreign matter discharging part that discharges foreign matter such as abrasion powder to the outside, even when a cover that covers a front side end surface of an armature plate is provided with the foreign matter discharging part when the cover is attached. Solution to Problem

In order to achieve the above object, an electromagnetic clutch according to claim 1 includes: a rotor rotatably supported by a housing of a compressor and configured to receive a rotational force from a rotational power source to rotate; a hub coupled to a drive shaft of the compressor so as not to be rotatable relative thereto and rotating together with the drive shaft; an armature plate coupled to the hub and having a rear side end surface disposed to face a friction wall of the rotor with a gap therebetween; an excitation coil supported by the housing of the compressor, accommodated in an inside of the rotor, and configured to generate an electromagnetic attraction force between the armature plate and the rotor; and a cover attached to the rotor and configured to cover a front side end surface of the armature plate, the cover including a top surface part disposed to face the front side end surface opposite to the rear side end surface of the armature plate and a cylindrical part extending from the top surface part. A foreign matter discharging part that discharges foreign matter in the cover to an outside of the cover and toward a rear side of the compressor is formed on the cylindrical part of the cover. The rotational power source is, for example, an engine or a motor of an automobile. The foreign matter is, for example, abrasion powder generated by frictional engagement between the rotor and the armature plate.

Accordingly, since the cover covering the front side end surface of the armature plate of the electromagnetic clutch forms the foreign matter discharging part on the cylindrical part instead of the top surface part that is likely to be exposed to water from a front side, the water from the front side of the electromagnetic clutch can be prevented from entering the cover and further entering the electromagnetic clutch from the foreign matter discharging part.

In the electromagnetic clutch according to claim 2, the foreign matter discharging part of the cover is formed to protrude outward from the cylindrical part, and includes a first opening facing a side peripheral surface side of the armature plate, a second opening facing the rear side of the compressor, and an internal space communicating with the first and second openings.

Accordingly, the foreign matter in the cover of the electromagnetic clutch enters the internal space of the foreign matter discharging part from the first opening, and then is discharged to an outside of the electromagnetic clutch from the second opening, while the two openings of the foreign matter discharging part of the cover, through which the foreign matter enters and exits, are directed to the side peripheral surface side of the armature plate and the rear side of the compressor respectively, and therefore, even if the electromagnetic clutch is covered with water from the front side end surface side of the armature plate of the electromagnetic clutch, the water can be prevented from entering the cover and further entering the electromagnetic clutch from the foreign matter discharging part.

In the electromagnetic clutch according to claim 3, the rotor includes a plurality of ring-shaped constituting members, and adjacent constituting members of the plurality of constituting members are coupled to each other via a ring-shaped magnetism shielding part made of a non-magnetic body. The plurality of ring-shaped constituting members are, for example, a friction wall constituting member having a friction surface facing a friction surface of the armature plate, an outer peripheral wall constituting member positioned on an outer side than the friction wall constituting member, and an inner peripheral wall constituting member positioned on an inner side than the friction wall constituting member. Accordingly, the abrasion powder generated by the frictional engagement between the rotor and the armature plate can be prevented from entering between the rotor and a coil case.

### Advantageous Effect

As described above, according to the invention, the foreign matter discharging part of the cover that covers the front side end surface of the armature plate of the electromagnetic clutch is formed on a side peripheral surface of the cylindrical part. In addition, the two openings of the foreign matter discharging part of the cover face the side peripheral surface side of the armature plate and the rear side of the compressor, respectively. Therefore, even if the electromagnetic clutch is covered with water from the front side of the electromagnetic clutch, the water can be prevented from entering the cover and further entering the electromagnetic clutch from the foreign matter discharging part and rusting the bearing, unlike the case where the foreign matter discharging part is formed on the top surface part of the cover.

In particular, according to the invention of claim 3, the abrasion powder generated by the frictional engagement between the rotor and the armature plate can be prevented from entering a space between the rotor and the coil case.

### Brief Description of Drawings

[FIG. 1] FIG. 1 is a side view showing an external appearance of a configuration in which a cover according to the invention is attached to an electromagnetic clutch in an example of a compressor equipped with the electromagnetic clutch to which the invention is applied.
[FIG. 2] FIG. 2 is a cross-sectional view of a configuration in which the cover according to the invention is attached to the electromagnetic clutch as view obliquely from a front side.
[FIG. 3] FIG. 3 is a cross-sectional view of the configuration in which the cover according to the invention is attached to the electromagnetic clutch as viewed from a side.
[FIG. 4] FIG. 4 is an explanatory view showing an outline of a configuration of a rotor according to the invention used in the electromagnetic clutch, in which (a) of FIG. 4 is a front view of the rotor, and (b) of FIG. 4 is a cross-sectional view taken along a line I-I in (a) of FIG. 4.
[FIG. 5] FIG. 5 is an explanatory view showing an outline of a configuration of an armature plate used in the electromagnetic clutch, in which (a) of FIG. 5 is a front view of the armature plate, and (b) of FIG. 5 is a cross-sectional view taken along a line II-II in (a) of FIG. 5.
[FIG. 6] (a) of FIG. 6 is a front view of the cover according to the invention, and (b) of FIG. 6 is a back view of the cover according to the invention.
[FIG. 7] (a) of FIG. 7 is a perspective view of the cover according to the invention as viewed obliquely from the front side, and (b) of FIG. 7 is a perspective view of the cover according to the invention as viewed obliquely from a rear side.

### Description of Embodiments

Hereinafter, embodiments of the invention will be described with reference to the accompanying drawings.

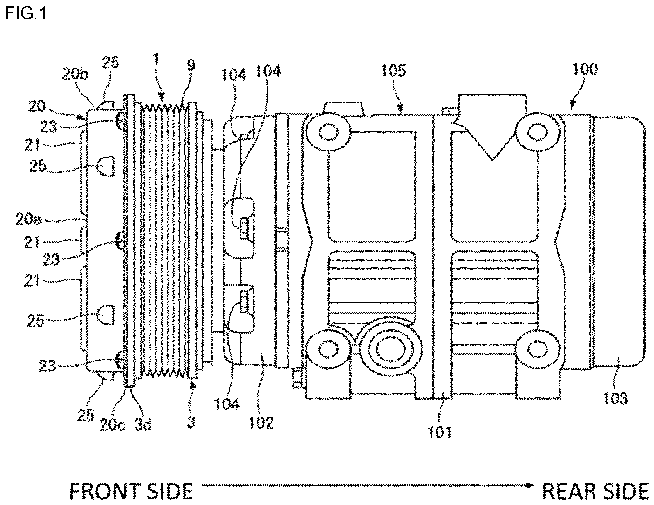

A compressor 100 shown in FIG. 1 is a refrigerant compressor for an air conditioner of a large-sized vehicle such as a bus or a track. It is noted that the type of the compressor according to the invention is not limited to such a refrigerant compressor for an air conditioner of a large-sized vehicle. Although not shown, the invention is also applicable to, for example, a compressor constituting a refrigeration cycle of an air conditioner of a passenger vehicle. In FIG. 1, a left side of the figure is a front side, and a right side of the figure is a rear side.

The compressor 100 shown FIG. 1 will be described as an example of a compressor equipped with an electromagnetic clutch 1 to which the invention is applied, and includes a cylinder block 101, a front head 102 assembled to a front side of the cylinder block 101 via a valve plate, and a rear head 103 assembled to a rear side of the cylinder block 101 via a valve plate. The cylinder block 101, the front head 102, and the rear head 103 are fastened by fastening bolts 104 (only heads thereof are shown) along an axial direction thereof to form a housing 105 of the compressor 100.

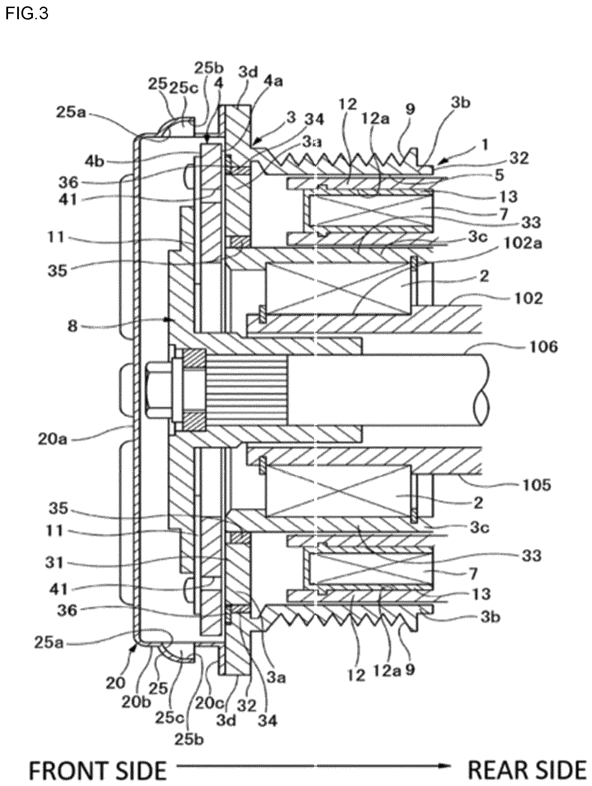

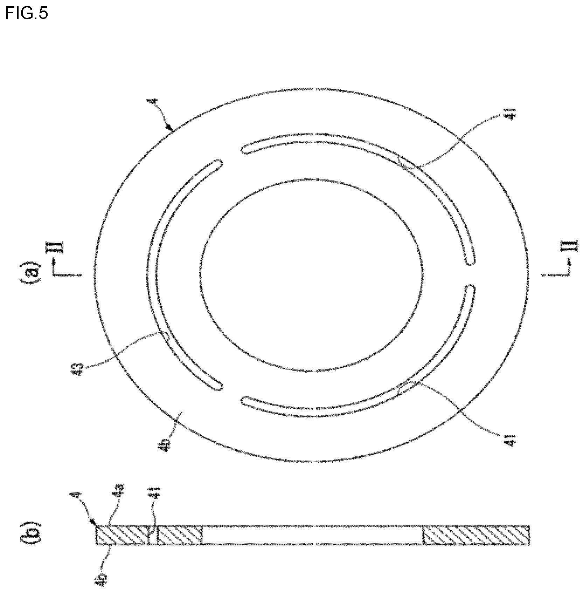

A plurality of cylinder bores and a crank chamber (not shown) are defined in the cylinder block 101 of the housing 105. A drive shaft 106 (shown by a broken line in FIG. 5) passing through the crank chamber is rotatably supported in the cylinder block 101, so that a swash plate (not shown) disposed in the crank chamber is rotated by rotation of the drive shaft 106 to reciprocate a double-head piston (not shown) in each of the cylinder bores. As shown in FIG. 3, the electromagnetic clutch 1 is attached to one end of the drive shaft 106.

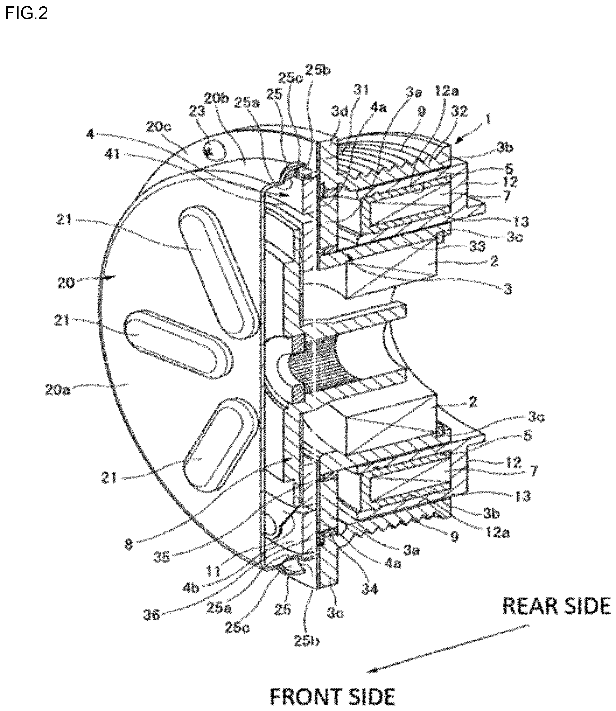

The electromagnetic clutch 1 shown in FIGS. 2 and 3 is used to interrupt a rotational force transmitted from a rotational power source (not shown) such as an engine or a motor to the compressor 100. In FIGS. 2 and 3, a left side of the figure is the front side, and a right side of the figure is the rear side.

As shown in FIGS. 2 and 3, the electromagnetic clutch 1 includes: a rotor 3 that is rotatably supported via a bearing 2 such as a ball bearing, by a cylindrical part 102a (shown in FIG. 3) protruding from an end part of the front head 102 around the drive shaft 106 of the compressor 100; a hub 8 that is coupled to the drive shaft 106 of the compressor 100 so as not to be rotatable relative thereto and rotates together with the drive shaft 106; an armature plate 4 that is disposed to face the rotor 3 with a slight gap therebetween in an axial direction and fixed to the hub 8; and an excitation coil 7 that is supported by the housing 105 of the compressor 100, accommodated in the inside of the rotor 3, and generates an electromagnetic attraction force between the armature plate 4 and the rotor 3. In the embodiment, a leaf spring mechanism 11 that urges the armature plate 4 in a direction away from the rotor 3 is used, as a mechanism that prevents the armature plate 4 from coming into contact with the rotor 3 when the excitation coil 7 is not energized, between the hub 8 and the armature plate 4.

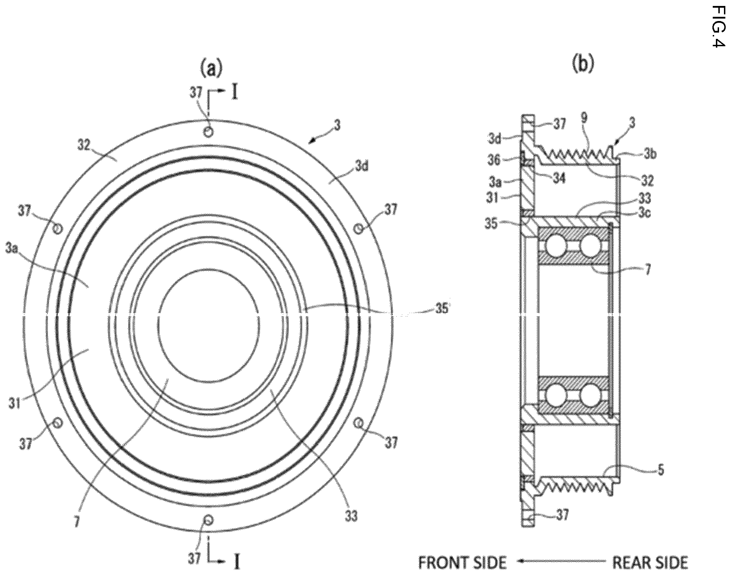

The rotor 3 shown as a single body in FIG. 4 is a magnetic body except for non-magnetic bodies 34 and 35 described below, is provided with the bearing 2 on an inner periphery thereof, and is rotatably mounted on an outer periphery of the cylindrical part 102a that extends from the front head 102 of the compressor 100 via the bearing 2 so as to allow the drive shaft 106 to be inserted therethrough. The rotor 3 has a friction wall 3a on an opposite side (a front side) to the compressor 100, and a front side end surface of the friction wall 3a is formed in a flat shape substantially perpendicular to an axial center of the rotor 3 and has a friction surface facing the armature plate 4.

In addition, in the embodiment, as shown in FIGS. 2 to 4 (in particular, FIG. 4), the rotor 3 includes a ring-shaped friction wall constituting member 31 having the friction wall 3a, a ring-shaped outer peripheral wall constituting member 32 disposed on an outer peripheral side than the friction wall constituting member 31 and having an outer peripheral wall 3b extending laterally (in an axial direction of the drive shaft 106) toward the rear side, a ring-shaped inner peripheral wall constituting member 33 disposed on an inner peripheral side than the friction wall constituting member 31 and having an inner peripheral wall 3c extending laterally (in the axial direction of the drive shaft 106) toward the rear side, the ring-shaped outer non-magnetic body 34 connecting the friction wall constituting member 31 with the outer peripheral wall constituting member 32, and the ring-shaped outer non-magnetic body 35 connecting the friction wall constituting member 31 with the inner peripheral wall constituting member 33. The constituting members 31, 32, and 33 are made of an iron-based magnetic material. The non-magnetic bodies 34 and 35 are made of, for example, a non-magnetic metal such as copper.

The non-magnetic bodies 34 and 35 are formed in a concentric shape disposed at a predetermined interval around a central axis of the rotor 3 so that the non-magnetic body 34 is located on an outer side and the non-magnetic body 35 is located on an inner side. A thin ring-shaped friction member 36 is disposed on a front side of the outer non-magnetic body 34. A front side end surface of the friction member 36 is flat and is located on the same plane as that of a friction surface of the friction wall 3a. A front side end surface of the inner non-magnetic body 35 is located at a position recessed from the friction surface of the friction wall 3a and a front side end surface of the outer peripheral wall constituting member 32, so that a step part is formed between the friction wall constituting member 31 and the outer peripheral wall constituting member 32 of the rotor 3.

In addition, the bearing 2 is fixed to an inner peripheral side of the inner peripheral wall 3c of the inner peripheral wall constituting member 33 constituting the rotor 3. An annular space 5 of which a rear side is opened is formed between the outer peripheral wall 3b of the outer peripheral wall constituting member 32 and the inner peripheral wall 3c of the inner peripheral wall constituting member 33, and the annular space 5 accommodates, via a predetermined clearance, a coil case 12 accommodating the excitation coil 7. Accordingly, the rotor 3 is rotatable along the excitation coil 7 (the coil case 12) without being in sliding contact with the coil case 12. In addition, a belt groove 9 including a plurality of V-shaped grooves around which a belt (not shown) for transmitting the rotational force from the rotational power source is wound is formed in an outer peripheral side of the outer peripheral wall 3b of the outer peripheral wall constituting member 32.

The armature plate 4 shown as a single body in FIG. 5 is formed in a disk shape, is coupled to the leaf spring mechanism 11, and has a rear side end surface 4a disposed to face the friction surface of the friction wall 3a of the rotor 3 with a slight gap therebetween. The rear side end surface 4a is formed in a flat shape substantially perpendicular to the axial center of the rotor 3, and forms a friction surface facing the friction surface and the like of the friction wall 3a of the rotor 3. In addition, in the armature plate 4, a plurality of arc-shaped slit holes 41 are formed as a magnetism shielding part that shields magnetism generated by energizing the excitation coil 7 described below. These slit holes 41 penetrate the armature plate 4 in the axial direction of the drive shaft 106, and therefore are disposed along a circumference of a circle centered on a central axis of the armature plate 4.

The excitation coil 7 is accommodated in the coil case 12. The coil case 12 is formed of an annular iron container, has an annular groove 12a whose one end is opened, and accommodates the excitation coil 7 in the annular groove 12a. The annular groove 12a is filled with an epoxy resin material 13 to fix the excitation coil 7. The coil case 12 is attached to the front head 102 of the compressor 100.

In the present embodiment, in order to prevent the bearing 2 from rusting due to the electromagnetic clutch 1 being exposed to water from the front side, the rotor 3 is provided with, on the outer peripheral wall constituting member 32, a flange-shaped protruding wall 3d protruding further to the outer peripheral side than the outer peripheral wall 3b, and a waterproof cover 20 is mainly attached to a front side of the protruding wall 3d. That is, in the protruding wall 3d of the rotor 3, a plurality of (six in the embodiment) screw holes 37 (shown in FIG. 4) through which fixtures 23 such as screws described below are inserted are formed.

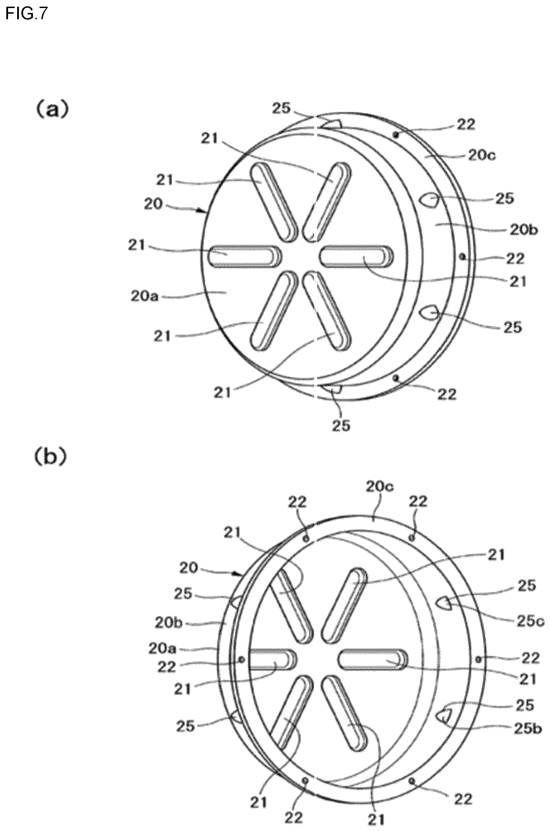

As shown in FIGS. 1 to 3, 6, and 7, the cover 20 attached to the rotor 3 basically includes a top surface part 20a whose inner peripheral surface faces side end surfaces of the armature plate 4 and the hub 8, a cylindrical part 20b extending from a peripheral edge of the top surface part 20a toward a rear side, and a flange 20c protruding outward from an end of the cylindrical part 20b in an extending direction, and covers an entire front side end surface 4b and a side peripheral surface of the armature plate 4.

Intervals with a predetermined width are formed between an inner surface of the top surface part 20a of the cover 20 and the side end surfaces of the armature plate 4 and the hub 8, and between an inner peripheral surface of the cylindrical part 20b of the cover 20 and an outer peripheral surface of the armature plate 4 so as not to bring the cover 20 into contact with the armature plate 4 and the hub 8 when the cover 20 rotates in synchronization with the rotor 3.

The top surface part 20a of the cover 20 is formed with a plurality of (five in the embodiment) bulging parts 21 bulging in a substantially oval shape from an end surface of the top surface 20a toward a front side. The bulging parts 21 radially extend from a center of the top surface part 20a of the cover 20 toward an outer periphery, and intervals between the bulging parts 21 are uniform. In this way, by forming the bulging parts 21 on the top surface part 20a of the cover 20, the rigidity of the top surface part 20a is improved, and generation of abnormal noise from the top surface part 20a is prevented. In the flange 20c, a plurality of (six in the embodiment) through holes 22 through which the fixtures 23 are inserted are formed at positions on the same axis as the screw holes 37 of the rotor 3 and in an extending direction of the bulging parts 21.

In addition, in the electromagnetic clutch according to the invention, as a configuration for discharging abrasion powder generated by frictional coupling between the armature plate 4 and the rotor 3 to an outside of the electromagnetic clutch 1, a plurality of (six in the embodiment) foreign matter discharging parts 25 are formed on the cover 20. In the embodiment, each of the foreign matter discharging parts 25 is formed between adjacent bulging parts 21 from a viewpoint of facilitating the formation of the cover 20.

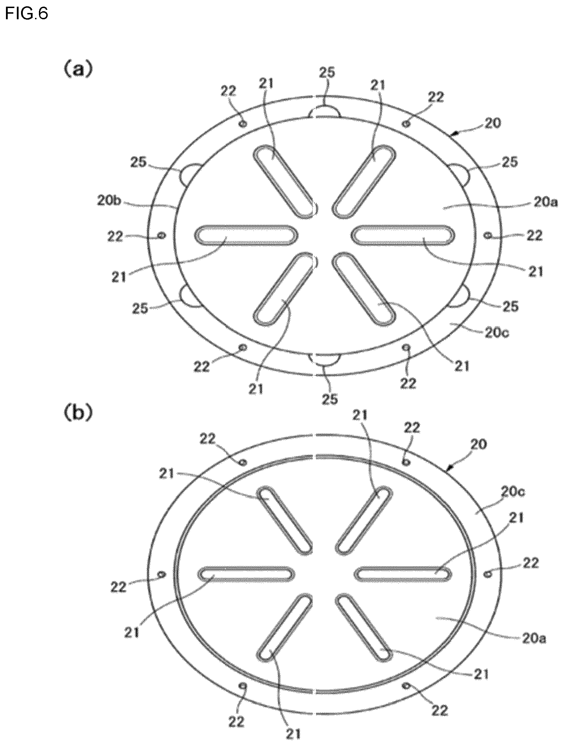

Six foreign matter discharging parts 25 formed on the cylindrical part 20b of the cover 20 are disposed with equal intervals as shown in (a) of FIG. 6 in the embodiment, but the number and arrangement of the foreign matter discharging parts 25 are not necessarily limited thereto. It is preferable that three or more foreign matter discharging parts 25 are disposed with the equal intervals in consideration of a balance when the cover 20 rotates together with the rotor 3.

Each of the foreign matter discharging parts 25 is formed to protrude outward from the cylindrical part 20b of the cover 20, and includes an opening 25a opened to an armature plate 4 side on a front side of the side end surface of the armature plate 4, an opening 25b facing a rear side, and an internal space 25c communicating with both the opening 25a and the opening 25b. A sufficient interval is provided between the opening 25b of the foreign matter discharging part 25 and the flange 20c of the cover 20 so that the abrasion powder can be smoothly discharged from the opening 25b. In order to form the internal space 25c having the openings 25a and 25b in this way, in the embodiment, a thin wall part is erected in a U shape that blocks a front side and opens a rear side from a peripheral edge of the opening 25a formed in the cylindrical part 20b, and then extends toward the rear side in a manner of covering the opening 25a to provide a function as an eave. That is, an outer shape of the foreign matter discharging part 25 is a substantially 1/4 spherical shape having a hollow inside.

In order to prevent the foreign matter discharging parts 25 from being an obstacle when the fixtures 23 are inserted from the front side into the through holes 22 of the cover 20 in a state of abutting against the rotor 3, as shown in (a) of FIG. 6, the foreign matter discharging parts 25 and the through holes 22 are disposed so as to be shifted from each other in a circumferential direction of the cover 20.

By forming such foreign matter discharging parts 25 on the cylindrical part 20b of the cover 20, the abrasion powder can be taken into the internal space 25c from the opening 25a of each of the foreign matter discharging parts 25 and discharged from the opening 25b.

In addition, since a wall part surrounding the internal space 25c of each of the foreign matter discharging parts 25 functions as an eave that blocks a front side of the internal space 25c (surrounds a front side of the opening 25b), even if the electromagnetic clutch 1 is exposed to water from the front side, the water can be prevented from entering the cover 20 and further entering the electromagnetic clutch 1 from the foreign matter discharging parts 25.

In addition, since the magnetism shielding part of the rotor 3 is made of a ring-shaped non-magnetic body, a foreign matter such as the abrasion powder can be prevented from entering a space between the rotor 3 and the coil case 12. Although the space between the rotor 3 and the cover 20 is surrounded, since the foreign matter discharging parts 25 are formed on the cover 20, there is no possibility that the foreign matter stays inside the cover 20.

In addition, since the magnetism shielding part of the rotor 3 can be formed in a ring shape, a problem that magnetic leakage due to a bridge disposed between the slit holes occurs can be eliminated, as compared with a case where the magnetism shielding part of the rotor 3 is formed by a slit hole having a through hole shape.

Although the example in which the magnetism shielding part of the rotor 3 shown as a single body in FIG. 4 is formed by the non-magnetic bodies 34 and 35 has been described, the magnetism shielding part is not limited to the configuration. Even in a case where the magnetism shielding part of the rotor 3 is formed by the slit hole (not shown) as the magnetism shielding part of the armature plate 4, with a structure in which the cover 20 covers the front side end surface 4b of the armature plate 4, by applying the foreign matter discharging parts 25 of the invention to the cover 20, the abrasion powder can be discharged from the foreign matter discharging parts 25 of the cover 20, and the abrasion powder can be prevented from staying inside the cover while preventing water from entering the electromagnetic clutch 1 from the foreign matter discharging parts 25.

### Reference Sign List

1 electromagnetic clutch
3 rotor
3a friction wall
31 friction wall constituting member (constituting member)
32 outer peripheral wall constituting member (constituting member)
33 inner peripheral wall constituting member (constituting member)
34 outer non-magnetic body (non-magnetic body)
35 inner non-magnetic body (non-magnetic body)
4 armature plate
4a rear side end surface
4b front side end surface
7 excitation coil
8 hub
20 cover
20a top surface part
20b cylindrical part
25 foreign matter removing part
25a opening (first opening)
25b opening (second opening)
25c internal space
100 compressor
105 housing
106 drive shaft

## Claims

1. An electromagnetic clutch (1) comprising:
a rotor (3) rotatably supported by a housing (105) of a compressor (100) and configured to receive a rotational force from a rotational power source to rotate;
a hub (8) coupled to a drive shaft (106) of the compressor (100) so as not to be rotatable relative thereto and rotating together with the drive shaft (106);
an armature plate (4) coupled to the hub (8) and having a rear side end surface (4a) disposed to face a friction wall (3a) of the rotor (3) with a gap therebetween;
an excitation coil (7) supported by the housing (105) of the compressor (100), accommodated in an inside of the rotor (3), and configured to generate an electromagnetic attraction force between the armature plate (4) and the rotor (3); and
a cover (20) attached to the rotor (3) and configured to cover a front side end surface (4b) of the armature plate (4), the cover (20) including a top surface part (20a) disposed to face the front side end surface (4b) opposite to the rear side end surface (4a) of the armature plate (4) and a cylindrical part (20b) extending from the top surface part (20a), **characterized in that**
a foreign matter discharging part (25) that discharges foreign matter in the cover (20) to an outside of the cover (20) and toward a rear side of the compressor (100) is formed on the cylindrical part (20b) of the cover (20).

2. The electromagnetic clutch (1) according to claim 1, wherein
the foreign matter discharging part (25) of the cover (20) is formed to protrude outward from the cylindrical part (20b), and includes a first opening (25a) facing a side peripheral surface side of the armature plate (4), a second opening (25b) facing the rear side of the compressor (100), and an internal space communicating (25c) with the first and second openings (25a, 25b).

3. The electromagnetic clutch (1) according to claim 1 or 2, wherein
the rotor (3) includes a plurality of ring-shaped constituting members (31, 32, 33), and adjacent constituting members of the plurality of constituting members (31, 32, 33) are coupled to each other via a ring-shaped magnetism shielding part (34, 35) made of a non-magnetic body.

## Patentansprüche

1. Eine elektromagnetische Kupplung (1), umfassend:
einen Rotor (3), der drehbar von einem Gehäuse (105) eines Kompressors (100) gelagert ist und so konfiguriert ist, dass er eine Drehkraft von einer Drehkraftquelle aufnimmt, um sich zu drehen;
eine Nabe (8), die mit einer Antriebswelle (106) des Kompressors (100) so gekoppelt ist, dass sie relativ zu dieser nicht drehbar ist und sich zusammen mit der Antriebswelle (106) dreht;
eine Ankerplatte (4), die mit der Nabe (8) verbunden ist und eine hintere Seitenendfläche (4a) aufweist, die so angeordnet ist, dass sie einer Reibungswand (3a) des Rotors (3) mit einem Spalt dazwischen gegenüberliegt;
eine Erregerspule (7), die von dem Gehäuse (105) des Kompressors (100) getragen wird, in einem Inneren des Rotors (3) untergebracht ist und so konfiguriert ist, dass sie eine elektromagnetische Anziehungskraft zwischen der Ankerplatte (4) und dem Rotor (3) erzeugt; und
eine Abdeckung (20), die an dem Rotor (3) angebracht ist und so konfiguriert ist, dass sie eine vordere Seitenendfläche (4b) der Ankerplatte (4) abdeckt, wobei die Abdeckung (20) einen oberen Oberflächenteil (20a), der so angeordnet ist, dass er der vorderen Seitenendfläche (4b) gegenüber der hinteren Seitenendfläche (4a) der Ankerplatte (4) zugewandt ist, und einen zylindrischen Teil (20b) umfasst, der sich von dem oberen Oberflächenteil (20a) erstreckt, **dadurch gekennzeichnet, dass**
ein Fremdkörperauslassabschnitt (25), der Fremdkörper in der Abdeckung (20) nach außen und in Richtung einer Rückseite des Kompressors (100) ausstößt, an dem zylindrischen Abschnitt (20b) der Abdeckung (20) ausgebildet ist.

2. Die elektromagnetische Kupplung (1) gemäß Anspruch 1, wobei der Fremdkörperauslassabschnitt (25) der Abdeckung (20) so ausgebildet ist, dass er aus dem zylindrischen Abschnitt (20b) nach außen vorsteht, und eine erste Öffnung (25a), die einer Seitenumfangsfläche der Ankerplatte (4) zugewandt ist, eine zweite Öffnung (25b), die der Rückseite des Kompressors (100) zugewandt ist, und einen Innenraum (25c) aufweist, der mit der ersten und der zweiten Öffnung (25a, 25b) in Verbindung steht.

3. Die elektromagnetische Kupplung (1) gemäß Anspruch 1 oder 2, wobei
der Rotor (3) mehrere ringförmige Bestandteile (31, 32, 33) umfasst und benachbarte Bestandteile der mehreren Bestandteile (31, 32, 33) über einen ringförmigen Magnetabschirmungsteil (34, 35) aus einem nichtmagnetischen Körper miteinander verbunden sind.

## Revendications

1. Un embrayage électromagnétique (1) comprenant :
un rotor (3) supporté de manière rotative par un boîtier (105) d'un compresseur (100) et configuré pour recevoir une force de rotation provenant d'une source d'énergie rotative afin de tourner ;
un moyeu (8) couplé à un arbre d'entraînement (106) du compresseur (100) de manière à ne pas pouvoir tourner par rapport à celui-ci et tournant conjointement avec l'arbre d'entraînement (106) ;
une plaque d'induit (4) couplée au moyeu (8) et comportant une surface d'extrémité arrière (4a) disposée de manière à faire face à une paroi de friction (3a) du rotor (3) avec un espace entre elles ;
une bobine d'excitation (7) supportée par le boîtier (105) du compresseur (100), logée à l'intérieur du rotor (3) et configurée pour générer une force d'attraction électromagnétique entre la plaque d'armature (4) et le rotor (3) ; et
un couvercle (20) fixé au rotor (3) et configuré pour recouvrir une surface d'extrémité avant (4b) de la plaque d'armature (4), le couvercle (20) comprenant une partie de surface supérieure (20a) disposée de manière à faire face à la surface d'extrémité avant (4b) opposée à la surface d'extrémité arrière (4a) de la plaque d'armature (4) et une partie cylindrique (20b) s'étendant à partir de la partie de surface supérieure (20a), **caractérisé en ce que**
une partie d'évacuation des corps étrangers (25) qui évacue les corps étrangers dans le couvercle (20) vers l'extérieur du couvercle (20) et vers l'arrière du compresseur (100) est formée sur la partie cylindrique (20b) du couvercle (20).

2. L'embrayage électromagnétique (1) selon la revendication 1, dans lequel
la partie d'évacuation des corps étrangers (25) du couvercle (20) est formée de manière à faire saillie vers l'extérieur à partir de la partie cylindrique (20b) et comprend une première ouverture (25a) faisant face à un côté de la surface périphérique de la plaque d'induit (4), une deuxième ouverture (25b) faisant face à l'arrière du compresseur (100), et un espace interne (25c) communiquant avec les première et deuxième ouvertures (25a, 25b).

3. L'embrayage électromagnétique (1) selon la revendication 1 ou 2, dans lequel le rotor (3) comprend une pluralité d'éléments constitutifs en forme d'anneau (31, 32, 33), et les éléments constitutifs adjacents de la pluralité d'éléments constitutifs (31, 32, 33) sont couplés les uns aux autres via une partie de blindage magnétique en forme d'anneau (34, 35) constituée d'un corps non magnétique.
